# FASCICULE DE BREVET EUROPEEN

(11) **EP 0 402 443 B1**
(45) Date de publication et mention de la délivrance du brevet: **24.02.1993**
(21) Numéro de dépôt: 90900899.7
(22) Date de dépôt: 22.12.1989
(51) Int. Cl.: B29C 67/14

(54) **STRUCTURES TEXTILES, UTILES COMME RENFORTS DANS LA FABRICATION DE MATERIAUX COMPOSITES, ET FILS TECHNIQUES POUR DE TELLES STRUCTURES**
ALS VERSTÄRKUNG ZUR HERSTELLUNG VON VERBUNDWERKSTOFFEN VERWENDBARE TEXTILSTRUKTUREN UND FÄDEN FÜR SOLCHE STRUKTUREN
TEXTILE STRUCTURES, USEFUL AS REINFORCING MEANS IN THE MANUFACTURE OF COMPOSITE MATERIALS, AND TECHNICAL THREADS FOR SUCH STRUCTURES

(30) Priorité: 23.12.1988 FR 8817135
(43) Date de publication de la demande: 19.12.1990
(73) Titulaire: BROCHIER S.A., F-69152 Décines Charpieu Cédex (FR)
(72) Inventeur: BOMPARD, Bruno, F-69003 Lyon (FR); DURAND, Jean-Charles, F-69004 Lyon (FR); LAMARIE, Jean-Paul, F-69300 Caluire (FR)
(74) Mandataire: Phélip, Bruno
(86) Numéro de dépôt international: FR8900676
(87) Numéro de publication internationale: WO9007422

(56) Documents cités:
- FR-A- 864 395
- FR-A- 2 110 986
- FR-A- 2 146 941
- US-A- 3 715 878
- US-A- 3 775 228
- US-A- 3 808 087
- US-A- 4 157 645

## Description

L'invention appartient au domaine des composants textiles pour la fabrication des matériaux composites. Elle a plus particulièrement pour objet des structures textiles, pouvant servir de renforts dans les matériaux composites. Elle concerne également des fils techniques de configuration originale, destinés à de telles structures.

On sait que les matériaux composites sont formés d'une combinaison intime de structures textiles de renfort et de matrices ou résines d'imprégnation. De tels matériaux trouvent de larges débauchés à l'heure actuelle, par exemple dans l'industrie aéronautique. Pour obtenir des matériaux ayant les propriétés recherchées, il est nécessaire d'utiliser une proportion assez élevée de structure textile, notamment en empilant diverses couches de renfort. On sait cependant que l'imprégnation par les résines de telles couches de renfort ne se réalise pas d'une manière optimale de sorte que, sous l'effet de contraintes mécaniques , on peut constater des dommages qui sont dus à une séparation de certaines couches au sein du renfort textile, ce que l'homme du métier connaît sous le nom de "délaminage". On comprend que, compte-tenu des applications de tels matériaux composites, il soit indispensable de remédier à de tels inconvénients.

L'un des moyens proposés dans l'art antérieur consiste à utiliser au moins pour partie dans le renfort textile, une structure multidimensionnelle, par exemple tridimensionnelle. De telles structures donnent satisfaction, mais elles sont longues et coûteuses à obtenir.

En résumé, on peut dire que les critères actuels de choix d'une structure textile servant de renfort pour la fabrication de matériaux composites sont: la nature des fils, la répartition et l'orientation de ceux-ci, ainsi que leur mode de mise en oeuvre (par exemple sous forme de structures tissées ou de nappes unidirectionnelles). Ces critères sont utilisés en fonction des propriétés recherchées pour le matériau composite.

La présente invention a pour objet des structures textiles et des fils dont la configuration permet de procurer un effet dimensionnel dans un renfort pour matériaux composites, ce qui permet de lutter efficacement contre le délaminage et par conséquent d'augmenter les performances et la sécurité des matériaux composites ainsi obtenus.

L'invention a pour objet une structure textile utile comme renfort dans la fabrication des matériaux composites, ladite structure étant réalisée au moins en partie avec des fils techniques comprenant une âme portant des composants en saillie conférant au fil une configuration en relief.

Par "fil technique", on entend tout fil susceptible d'être utilisé dans des structures destinées au renfort de matériaux composites. qu'il soit de nature minérale, artificielle ou synthétique. De tels fils, seuls ou en mélange. sont connus de l'homme du métier et sont par exemple choisis parmi les fils de carbone, aramide, verre, quartz, silice, carbure de silicium, céramique et similaires.

Dans l'art antérieur, on avait déjà proposé dans certaines applications de faire subir à un fil un traitement de surface, dit de texturisation, destiné à lui conférer un aspect irrégulier, on peut ainsi se référer au brevet US 3.775.228. On notera tout d'abord qu'un tel traitement de texturisation ne peut être employé pour de nombreux fils techniques, notamment en raison de leur faible résistance à la flexion. Mais surtout, la texturisation modifie l'aspect du fil lui-même, sans adjonction d'aucun autre élément additionnel. D'ailleurs, l'effet de la texturisation n'est que superficiel et ne peut se comparer à une configuration en relief comme le prévoit la présente invention. Celle-ci, par exemple, peut provenir de l'adjonction de boucles et/ou de poils sur le fil support (âme). L'orientation de tels reliefs, par exemple de ces boucles et/ou poils, procure un effet multidirectionnel, qui peut être organisé ou au contraire aléatoire.

Dans l'art textile traditionnel, on sait réaliser des articles fantaisie comprenant des fils avec des éléments additionnels, par exemple du genre guirlandes.

On connaît ainsi le brevet US 4.157.645 qui décrit une machine pour la production de fil fantaisie bouclé. Ce fil est constitué de trois fils, un d'entre eux forme des boucles qui sont maintenues par deux autres fils tordus l'un par rapport à l'autre.

Un fil tordu présente une résistance à la traction inférieure à celle d'un fil rectiligne. Ce fil fantaisie ne convient donc pas comme renfort textile de matériaux composites susceptibles d'être soumis à des contraintes importantes.

On peut également citer le brevet GB 747.726 qui est relatif à la fabrication de matériaux plastiques armés. Ce brevet décrit des fils chenille constitués par une partie centrale comprenant deux fils métalliques entrelacés entre lesquels des fibres sont coincées.

Il n'est pas avantageux d'utiliser de tels fils chenille pour la réalisation d'articles composites dont on souhaite augmenter la sécurité et les performances car la résistance à la traction des fils chenille est inférieure à celle des fils métalliques qui entrent dans leur composition.

Il en est de même pour les fils décrits dans de nombreux documents de l'état de la technique, par exemple les brevets GB 804.464, FR 2.110.986 et FR 864.395, qui décrivent des fils entrelacés entre lesquels sont enserrées des fibres en saillie.

Un fil conforme à l'invention peut être réalisé en partant d'une âme sensiblement rectiligne, à laquelle on associe un fil comportant des boucles, régulières ou non, pour constituer un ensemble âme/fil à boucles, ledit ensemble étant solidarisé par au moins un fil indépendant de maintien ou de liage. On peut également réaliser un fil, ayant une configuration en relief avec des boucles, en associant à une âme sensiblement rectiligne une pluralité de fils à boucles, pour augmenter encore le caractère multidirectionnel des reliefs.

Dans la présente description, on désigne par âme sensiblement rectiligne un fil, ou ensemble de fils, n'ayant pas subi de torsion.

On comprend qu'en utilisant une âme rectiligne, la résistance à la traction du fil selon l'invention est bien supérieure à celle des fils connus.

Le brevet FR 2.146.941 décrit déjà un fil composite pour étoffe non tissée qui, dans un mode de réalisation, comporte une âme rectiligne sur laquelle sont maintenues des aiguilles thermoplastiques par l'intermédiaire d'un fil de liage. Ces aiguilles sont destinées à apporter de la résine de cohésion dans l'article fini mais ne participent pas au renfort textile et ne peuvent donc pas exercer la fonction tridimensionnelle des fils de l'invention.

On connaît aussi (brevet US 3.808.087) des fils, par exemple en carbone, sur lesquels sont fixés par voie chimique des éléments en saillie. De telles structures ne sont pas obtenues par des moyens textiles et ne comportent notamment aucun fil de liage indépendant.

Selon un autre mode de réalisation, on peut couper, dans une opération consécutive, les boucles en relief pour produire des éléments individuels ressemblant à des poils ou brindilles en saillie sur l'âme. D'autres variantes de réalisation permettent d'obtenir de telles structures avec des poils, par exemple en partant d'une âme à laquelle on associe un fil en zigzag, maintenu par un fil de liage et on procède ensuite à une découpe pour la formation des poils séparés.

L'homme du métier comprendra qu'un fil selon l'invention peut avoir des constitutions très variables, selon la nature de ses composants. Le fil en question peut être "pur", à savoir être formé d'un composant textile unique appartenant aux catégories de fils techniques mentionnées précédemment. Toutefois, même si la nature des composants est la même, certains des composants peuvent eux-mêmes avoir des particularités de surface et avoir subi, si la nature du fil le permet, un traitement de texturisation, comme c'est le cas du verre.

Conformément à l'invention, on peut aussi réaliser des fils "hybrides", comprenant une âme en un composant textile et au moins un fil à reliefs et/ou un fil de liage en au moins un autre composant textile, Un fil "hybride" peut également comprendre au moins un composant (âme, fil à reliefs, fil de liage) ayant lui-même une nature hybride. Un exemple typique de fil hybride est un fil comprenant une âme en silice ou en carbone et des reliefs en carbone. L'invention procure donc un moyen d'associer des composants de fils techniques, selon les propriétés désirées dans la structure textile finale. A la connaissance du demandeur, il n'a jamais été proposé jusqu'à présent de combiner dans les structures textiles à base de fibres techniques, destinées au renfort des matériaux composites, une âme support avec des éléments additionnels pouvant être différents, dans leur nature, de ladite âme.

Ainsi qu'on l'a mentionné précédemnent, les structures textiles utiles comme renforts dans la fabrication de matériaux composites, comprennent au moins un fil à configuration en relief.

Une telle structure textile peut être du genre unidirectionnel ou multidirectionnel, par exemple tissu, nappes, enroulement filamentaire et similaires. De telles structures peuvent être constituées exclusivement de fils à configuration en relief ou, en variante, être constituées d'une combinaison de fils à configuration en relief et de fils traditionnels. A titre d'exemple, on peut réaliser un tissu avec un fil à configuration en relief en mélange avec une pluralité de fils normaux.

Ces structures textiles sont essentiellement destinées à servir de renforts pour matériaux composites. L'invention a encore pour objet un renfort pour matériaux composites, comprenant au moins une structure textile à fils à configuration en relief du genre mentionné ci-dessus. Un tel renfort peut être constitué exclusivement de structures textiles selon l'invention ou en variante être constitué d'une combinaison de structures selon l'invention et de structures textiles traditionnelles.

A titre d'exemple, on peut réaliser selon l'invention un renfort de type stratifié constitué d'un empilement de structures telles que des tissus ou des nappes unidirectionnelles, l'empilement pouvant être homogène c'est-à-dire comprendre des structures de nature similaire ou mixte, par exemple avec une alternance de couches traditionnelles et de couches réalisées à partir de structures réalisées conformément à l'invention.

Grâce à l'invention, l'homme du métier dispose de beaucoup de possibilités pour obtenir les renforts les plus appropriés.

Bien que l'invention permette d'obtenir, grâce aux configurations en relief des fils, des orientations multidirectionnelles très intéressantes, il est parfaitement possible de réaliser des structures du genre tridimensionnel (3D) en utilisant au moins en partie de tels fils.

Par ailleurs, les fils selon l'invention peuvent être mis en oeuvre dans des structures textiles qui peuvent être commercialisées en tant que telles. Mais on peut aussi fournir à l'utilisateur final un fil à configuration en relief pouvant être mis en oeuvre dans une technique d'enroulement filamentaire (bobinage) conformément à la forme de l'article en matériau composite à obtenir.

Les fils selon l'invention et les structures textiles correspondantes peuvent comprendre des composants destinés à faciliter la fabrication du matériau composite. Par exemple, l'âme ou fil peut être imprégnée ou revêtue au préalable de matière thermoplastique, comme cela est connu pour les fils dits FIT. Egalement, les structures textiles peuvent recevoir une adjonction de poudre thermoplastique, permettant de faciliter leur manipulation et leur mise en oeuvre finale.

Pour la fabrication d'articles composite soumis à des contraintes non uniformes, on peut réaliser des structures textiles utilisant des fils conformes à l'invention dont le nombre de reliefs, boucles ou poils, ainsi que leur forme, ne sont pas uniformes de façon à s'ajuster aux contraintes auxquelles est soumis l'article composite final.

Ainsi, aux emplacement les plus sollicités de la pièce ou matériau composite à fabriquer, on peut utiliser des structures textiles dont les fils constitutifs selon l'invention comportent une densité de reliefs plus importante de façon à augmenter le taux volumique de fibres dans ces emplacements.

Selon l'invention, l'utilisation dans une structure textile de fils ayant une configuration en relief:
- assure une meilleure cohésion de la structure textile,
- permet de réaliser des jours entre certains de ses composants, par exemple entre fils de trame et fils de chaîne dans le cas d'un tissage.
- de façon générale, permet de régler le remplissage textile et
- procure un accroissement considérable de l'accrochage et de l'adhérence,
   - de la matrice (par exemple résine à la structure textile lors du processus de mise en oeuvre du composite (par exemple par injection),
   - et des couches constitutives d'un empilement dans le matériau composite, les unes par rapport aux autres.

L'invention assure ainsi une meilleure tenue au délaminage des matériaux composites, notamment en cas d'impact.

L'invention sera encore illustrée sans être aucunement limitée par la description qui suit faite en référence aux dessins annexés sur lesquels:
Fig. 1 représente les constituants d'un fil pour structure textile conforme à l'invention;
Fig. 2 illustre le fil correspondant à la figure 1 et présentant une configuration en relief avec des boucles;
Fig. 3 illustre l'obtention d'un fil ayant une configuration en relief avec des poils;
Fig. 4 illustre une structure textile selon l'invention;
Fig. 5 illustre une variante de structure textile;
Fig. 6 montre schématiquement un empilement de structures textiles utilisable comme renfort pour matériaux composites.

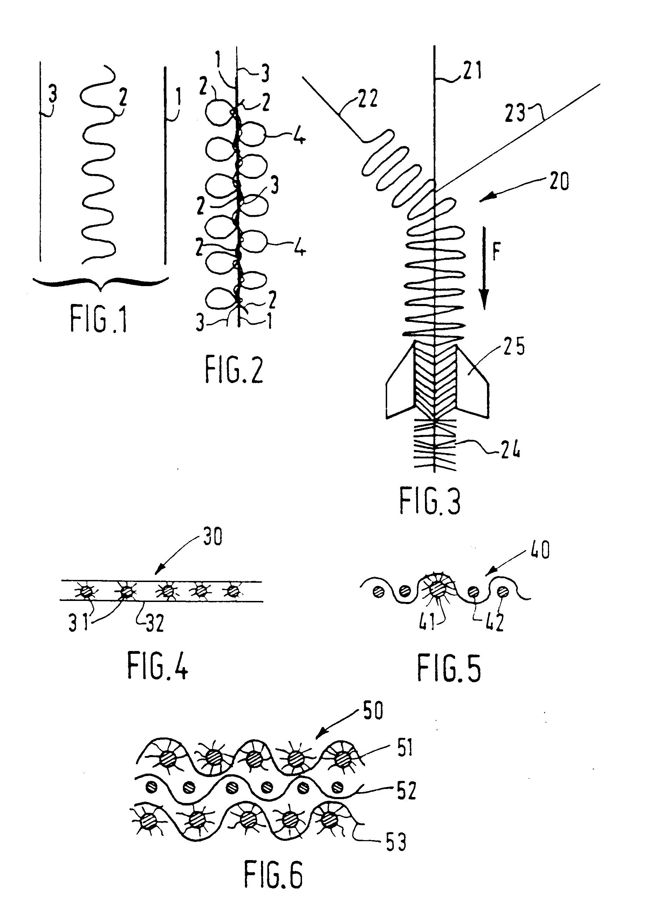

Le fil illustré aux figures 1 et 2 est désigné par la référence générale 10. Il comporte essentiellement une âme rectiligne 1 rendue solidaire d'un fil 2 bouclé, par un fil de liage 3. La figure 1 illustre les trois composants du fil 10 et la figure 2 montre le fil après fabrication. La représentation de la figure 2 est quelque peu déformée pour mettre en évidence les divers composants du fil; dans la pratique. ceux-ci sont intimement associés. On voit que ce fil 10 comporte des configurations en relief 4, sous forme de boucles, dont l'orientation dans l'espace est variable autour de l'âme 1, ce qui procure un effet multidimensionnel autour du fil.

La figure 3 illustre un mode de mise en oeuvre similaire, mais pour réaliser un fil comportant des poils. On a représenté schématiquement les trois constituants du fil qui est désigné par la référence générale 20, à savoir une âme rectiligne 21, un fil 22 ayant une configuration générale en zigzag et un fil de liage 23. Les trois constituants sont solidarisés de manière connue sur un métier textile et le fil 20 se déplace longitudinalement selon le sens de la flèche F pour aboutir à un dispositif 25 de découpe qui arase les extrémités en zigzag du fil 22 pour réaliser des poils 24 faisant saillie sur l'âme 21 et conférant ainsi au fil 20 une configuration en relief.

On peut répéter les opérations de fabrication, que ce soit pour des fils à boucles ou des fils à poils, pour leur conférer une pluralité de configurations en relief et ces opérations peuvent être réalisés simultanément au moment de la production du fil ou encore successivement.

La figure 4 illustre de manière schématique une nappe unidirectionnelle 30 comportant des fils 31 à relief conformes à l'invention, qui sont maintenus par un liage 32.

La figure 5 illustre un tissu 40 comportant en chaîne et/ou en trame des fils 41 conformes à l'invention et des fils 42 traditionnels.

La figure 6 montre un empilement de structures textiles pouvant servir de renfort dans la fabrication des matériaux composites. Ce renfort désigné par la référence générale 50 comprend, dans l'exemple représenté, trois couches de tissus 51, 52, 53. Les couches 51 et 53 sont des tissus conformes à l'invention avec des fils ayant une configuration en relief, tandis que la couche 52 est un tissu traditionnel.

Il va sans dire que les indications ci-dessus ne sont donnés qu'à titre illustratif et qu'on peut varier les combinaisons de fils selon l'invention et de fils traditionnels, comme celles des structures selon l'invention et des structures connues.

On notera aussi que les figures 4 à 6 illustrent des structures textiles réalisées sous forme de tissus ou de nappes unidirectionnelles. Les fils selon l'invention peuvent être également mis en oeuvre, ainsi qu'on l'a mentionné précédemment, dans des structures tridimensionnelles ou à titre d'enroulement filamentaire. Par exemple, on peut réaliser avec de tels fils des bobinages qui peuvent être directement imprégnés d'une résine de manière à produire un matériau composite.

L'invention sera encore illustrée sans être aucunement limitée par les Exemples suivants.

### EXEMPLE 1

Cet exemple illustre une structure textile conforme à l'invention, obtenue à partir d'un fil technique du type général décrit à la figure 2.

Cette structure textile est un tissu ayant les caractéristiques suivantes:
- Tissu unidirectionnel: 700 g/m²
- Armure: Taffetas
- Contexture: 3,3 fils/cm x 10 coups/cm
- Matière chaîne: verre E 11 Tex ensimage textile
- Matière Trame: fil technique selon l'invention décrit ci-dessous.

Le fil technique selon l'invention est réalisé avec trois fils de titre différent:
- âme 1: fil en verre E 300 Tex ensimage textiloplastique,
- fil à boucles 2: fil comportant des boucles en verre E 34 Tex ensimage textiloplastique.
- fil de liage 3: fil en verre E 68 Tex ensimage textiloplastique.

Les boucles 4 du fil 2 sont disposées régulièrement tous les 2,5 mm, leur nombre par mètre étant donc de 400 environ.

Le diamètre moyen des boucles 4 est de 4 mm.

Par ailleurs, on constate que le fil technique réalisé selon l'invention présente un effet dimensionnel avec une répartition de 60% de fibres dans la direction trame (direction X ) et de 60% de fibres dans les directions Y et Z, la direction Y étant perpendiculaire à la direction X et la direction Z orthogonale au plan formé par les deux directions X et Y.

En conséquence, le tissu obtenu en utilisant des fils techniques conformes à l'invention présente des fibres perpendiculaires au plan de tissage avec une masse de fibres:
- dans la direction X (direction Trame) égale à 420 g/m²
- dans les directions Y et Z égale à 280 g/m².

Afin de mettre en évidence les avantages procurés par l'invention, on a comparé la résistance en flexion d'un composite réalisé par empilement de tissus conformes à l'invention et d'un composite réalisé par empilement de tissus traditionnels.
a) Afin de réaliser un composite C₁ utilisant les structures de l'invention, différentes couches de tissu tel que décrit ci-dessus ont été empilées dans la même direction (voir par exemple figure 6 précédemment décrite).

Lors de l'empilage des différentes couches, on peut déjà constater une imbrication intime des boucles des différentes couches les unes dans les autres.

Une fois les différentes couches empilées, un composite C1 est réalisé par le procédé d'injection sous vide et sous pression de résine. en l'occurrence une résine époxy (CIBA GEIGY X 3052 A/B).
b) aux fins de comparaison, on réalise un composite C₂ dans les mêmes conditions opératoires à l'aide du tissu suivant:
   - Tissu unidirectionnel: 425 g/m²
   - Armature: Taffetas
   - Contexture: 3,3 fils/cm x 14 coups/cm
   - Matière chaîne: verre E 11 Tex ensimage textile
   - Matière trame, verre E 300 Tex ensimage textiloplastique.

Ainsi, compte tenu de la structure du tissu ci-dessus, la masse de fibres dans la direction X (direction trame) est égale à 420 g/cm2 c'est-à-dire identique à celle du tissu réalisé en utilisant les fils techniques conformes à l'invention.

Aux fins de comparaison, on a soumis les composites C₁ et C₂ définis ci-dessus à des essais de flexion selon la norme NF T 57-105 (Juin 1977). Elle correspond à la norme européenne EN63 de Mars 1977 intitulée "Détermination des caractéristiques de flexion - Méthode des trois pannes". Les essais ont été réalisés dans le sens trame (direction X). Les masses et volumes travaillant dans cette direction sont identiques pour les deux composites C₁ et C₂. Sous une force appliquée de 1050 N, on constate que le composite C₂ casse brutalement, contrairement au composite C₁ qui possède un allongement à la rupture nettement plus important. Le seuil de rupture du composite C₁ est progressif alors que le composite C₂ présente une rupture franche.

On voit donc que les composites fabriqués avec des structures textiles selon l'invention possèdent des résissupérieures à la flexion et à l'impact vis-à-vis des composites similaires traditionnels.

### EXEMPLE 2

Cet exemple illustre un fil conforme à l'invention, du type décrit à la figure 2.

Ce fil est réalisé en carbure de silicium avec:
- une âme: 2 fils de 500 filaments (Nicalon N_202),
- un fil de liage: 1 fil de 250 filaments (Nicalon N_217) grippé à 300 tours par mètres,
- un fil à boucles: 1 fil de 250 filaments formant des bouclettes.

Le fil à boucles comprend 160 boucles de 8 mm de diamètre par mètre linéaire.

### EXEMPLE 3

Cet exemple illustre également un fil conforme à l'invention. Ce fil est identique à celui de l'Exemple 1, sauf en ce qui concerne le fil à boucles qui comprend 160 boucles de 4 mm par mètre linéaire.

### EXEMPLE 4

Cette exemple illustre encore un fil conforme à l'invention. Ce fil est identique à celui des Exemples 2 ou 3 sauf en ce qui concerne le fil à boucles qui comprend 80 boucles de 4 mm de diamètre par mètre linéaire.

### EXEMPLE 5

Cet exemple illustre un fil conforme à l'invention dont le nombre de boucles ainsi que leur forme varient sur la longueur du fil. Ce fil est constitué, sur une longueur déterminée, par un fil réalisé selon l'Exemple 1, puis par celui réalisé selon l'Exemple 2 et enfin par le fil conforme à l'Exemple 3.

A partir d'un tel fil, on peut réaliser des structures textiles utilisables comme renforts dans la fabrication de matériaux composites soumis à des contraintes non uniformes.

## Revendications

1. Structure textile, utile comme renfort dans la fabrication de matériaux composites, réalisée avec des fils techniques caractérisée en ce qu'au moins certains desdits fils sont formés de trois constituants:
- une âme (1, 21) sensiblement rectiligne,
- un fil à reliefs (2, 22),
- un fil de liage (3, 23) indépendant, le fil à reliefs (2, 22) étant rendu solidaire de l'âme (1, 21) par le fil de liage (3, 23).

2. Structure textile selon la revendication 1, caractérisée en ce que les fils techniques sont tous les fils susceptibles d'être utilisés dans des structures destinées au renfort de matériaux composites, lesdits fils pouvant être de nature minérale, artificielle ou synthétique et étant par exemple choisis parmi les fils de carbone, aramide, verre, quartz, silice, carbure de silicium, céramique et similaires, seuls ou en mélange.

3. Structure textile selon l'une des revendications 1 ou 2, caractérisée en ce que les reliefs sont des boucles (4) et/ou des zigzags (22).

4. Structure textile selon l'une quelconque des revendications 1 à 3, caractérisée en ce que les boucles et/ou les extrémités en zigzag desdits fils sont arasées pour réaliser des poils (24).

5. Structure textile selon l'une quelconque des revendications 1 à 4, caractérisée en ce que l'orientation des reliefs, par exemple des boucles (4) et/ou des poils (24), procure un effet multidirectionnel, qui peut être organisé ou aléatoire.

6. Structure textile selon l'une quelconque des revendications 1 à 5, caractérisée en ce que les constituants des fils techniques sont de même nature textile.

7. Structure textile selon l'une quelconque des revendications 1 à 5, caractérisée en ce que les fils techniques sont hybrides, leurs constituants n'étant pas de même nature.

8. Structure textile selon la revendication 7, caractérisée en ce que les fils hybrides comprennent une âme en un composant textile et au moins un fil à reliefs et/ou un fil de liage en au moins un autre composant textile.

9. Structure textile selon la revendication 7, caractérisée en ce que les fils hybrides comprennent au moins un composant (âme, fil à reliefs, fil de liage) ayant lui-même une nature hybride.

10. Structure textile selon l'une quelconque des revendications 1 à 9, caractérisée en ce que certains des constituants des fils techniques présentent eux-mêmes des particularités de surface, par exemple après avoir subi, si la nature du fil le permet, un traitement de texturisation en soi connu.

11. Structure textile selon l'une quelconque des revendications 1 à 10, caractérisée en ce qu'elle est du genre unidirectionnel ou multidirectionnel, par exemple tissu. nappe, enroulement filamentaire et similaires.

12. Structure textile selon l'une quelconque des revendications 1 à 11, caractérisée en ce qu'elle est constituée exclusivement de fils à configuration en relief ou d'une combinaison de tels fils avec des fils traditionnels.

13. Structure textile selon l'une quelconque des revendications 1 à 12, caractérisée en ce qu'elle comprend des composants destinés à faciliter la fabrication du matériau composite, par exemple des fils imprégnés ou revêtus au préalable de matière thermoplastique.

14. Structure textile selon l'une quelconque des revendications 1 à 12, caractérisée en ce qu'elle reçoit une adjonction de poudre thermoplastique.

15. Renfort pour matériaux composites, comprenant au moins une structure textile selon l'une quelconque des revendications 1 à 14.

16. Renfort selon la revendication 15, caractérisé en ce qu'il est constitué exclusivement de structures textiles selon l'une quelconque des revendications 1 à 14 ou d'une combinaison de telles structures, avec des structures textiles traditionnelles.

17. Fil technique à configuration en relief, en tant qu'utilisé pour la réalisation des structures textiles selon l'une quelconque des revendications 1 à 14 et des renforts selon l'une des revendications 15 ou 16.

## Patentansprüche

1. Textilstruktur, die als Verstärkurg bei der Herstellung von Verbundwerkstoffen verwendbar ist, hergestellt mit technischen Fäden,
**dadurch gekennzeichnet,**
daß wenigstens einige dieser Fäden aus drei Destandteilen gebildet sind:
- einer Seele (1, 21), die im wesentlichen geradlinig ist,
- einem Faden mit Reliefs bzw. mit Profilen (2, 22),
- einem unabhängigen Bindungsfaden (3, 23), wobei der Faden mit Relief (2, 22) mit der Seele (1, 21) durch den Bindungsfaden (3, 23) fest verbunden ist.

2. Textilstruktur gemäß Anspruch 1, dadurch gekennzeichnet, daß die technischen Fäden alle Fäden sind, die geeignet sind, in Strukturen verwendet zu werden, die zur Verstärkung von Verbundwerkstoffen bestimmt sind, wobei diese Fäden mineralischer, künstlicher oder synthetischer Natur sein können und beispielsweise ausgewählt sind unter den Kohlenstoff-, Aramid-, Glas-, quarz-, Siliziumdioxid-, Siliziumkarbid-, keramischen und ähnlichen Fäden allein oder in Mischung.

3. Textilstruktur gemäß einem der Ansprüche 1 oder 2, dadurch gekennzeichnet, daß die Reliefs Schlingen (4) und/oder Zickzacks (22) sind.

4. Textilstruktur gemäß einem der Ansprüche 1-3, dadurch gekennzeichnet, daß die Schlingen und/oder die äußeren Zickzack-Enden dieser Fäden zum Bilden von Haaren (24) abgeschliffen sind.

5. Textilstruktur gemäß einem der Ansprüche 1-4, dadurch gekennzeichnet, daß die Orientierung der Reliefs,beispielsweise der Schleifen (4) und/oder der Haare (24), einen mehrdimensionalen Effekt ergibt, der organisiert oder zufällig sein kann.

6. Textilstruktur gemäß einem der Ansprüche 1-5, dadurch gekennzeichnet, daß die Bestandteile der technischen Fäden von der gleichen Textilart sind.

7. Textilstruktur gemäß einem der Ansprüche 1-5, dadurch gekennzeichnet, daß die technischen Fäden Hybride sind, wobei ihre Bestandteile nicht von der selben Art sind.

8. Textilstruktur gemäß Anspruch 7, dadurch gekennzeichnet, daß die hybriden Fäden eine Seele aus einem Textilbestandteil und mindestens einen Faden mit Reliefs und/oder einen Bindungsfaden aus wenigstens einem anderen Textilbestandteil enthalten.

9. Textilstruktur gemäß Anspruch 7, dadurch gekennzeichnet, daß die hybriden Fäden wenigstens einen Bestandteil (Seele, Faden mit Relief, Bindungsfaden) enthalten, der seinerseits von hybrider Art ist.

10. Textilsstruktur gemäß einem der Ansprüche 1-9, dadurch gekennzeichnet, daß einige der Bestandteile der technischen Fäden ihrerseits Besonderheiten der Oberfläche aufweisen, beispielsweise nachdem sie, wenn es die Beschafienheit des Fadens erlaubt, einer an sich bekannten Texturierungsbehandlung unterworfen wurden.

11. Textilstruktur gemäß einem der Ansprüche 1-10, dadurch gekennzeichnet, daß sie von in einer Richtung wirkender oder in mehreren Richtungen wirkender Art ist, beispielsweise Gewebe, Vlies, Fadenaufwicklung und ähnliches.

12. Textilstruktur gemäß einem der Ansprüche 1-11, dadurch gekennzeichnet, daß sie ausschließlich aus Fäden mit Reliefstruktur oder einer Kombination solcher Fäden mit herkömmlichen Fäden besteht.

13. Textilstruktur gemäß einem der Ansprüche 1-12, dadurch gekennzeichnet, daß sie Bestandteile enthält, die dazu bestimmt sind, die Erzeugung des Verbundwerkstoffs zu erleichtern, beispielsweise Fäden die vorher mit thermoplastischem Material imprägniert oder überzogen wurden.

14. Textilstruktur gemäß einem der Ansprüche 1-12, dadurch gekennzeichnet, daß sie einen Zusatz von thermoplastischem Pulver erhält.

15. Verstärkung für Verbundwerkstoffe, wenigstens eine Textilstruktur nach einem der Ansprüche 1-14 enthaltend.

16. Verstärkung gemäß Anspruch 15, dadurch gekennzeichnet, daß sie ausschließlich aus Textilstrukturen gemäß einem der Ansprüche 1-14 oder einer Kombination solcher Strukturen mit herkömmlichen Textilstrukturen besteht.

17. Technischer Faden mit Reliefaufbau bzw. struktur insoweit er zur Herstellung der Textilstukturen gemäß einem Ansprüche 1-14 und der Verstärkungen gemäß einem der Ansprüche 15 oder 16 verwendet wird.

## Claims

1. Textile structure useful as a reinforcement in the manufacture of composite materials, which structure is produced with technical yarns, characterized in that at least some of said yarns are formed from three constituents:
- a substantially straight core (1, 21),
- a relief yarn (2, 22),
- an independent binding yarn (3, 23), the relief yarn (2, 22) being secured to the core (1, 21) by the binding yarn (3, 23).

2. Textile structure according to claim 1, characterized in that the technical yarns are all yarns which may be used in structures intended for reinforcing composite materials, it being possible for said yarns to be of mineral, artificial or synthetic nature and being chosen, for example, from amongst carbon, aramid, glass, quartz, silica, silicon carbide, ceramic and similar yarns, alone or mixed.

3. Textile structure according to one of claims 1 or 2, characterized in that the reliefs are loops (4) and/or zigzags (22).

4. Textile structure according to any one of claims 1 to 3, characterized in that the loops and/or the zigzag ends of said yarns are shaved to produce pile hairs (24).

5. Textile structure according to any one of claims 1 to 4, characterized in that the orientation of the reliefs, for example of the loops (4) and/or of the pile hairs ( 24 ), produces a multidirectional effect which can be organized or random.

6. Textile structure according to any one of claims 1 to 5, characterized in that the constituents of the technical yarns are of the same textile nature.

7. Textile structure according to any one of claims 1 to 5, characterized in that the technical yarns are hybrid, their constituents not being of the same nature.

8. Textile structure according to claim 7, characterized in that the hybrid yarns comprise a core made of a textile component and at least one relief yarn and/or a binding yarn made of at least one other textile component.

9. Textile structure according to claim 7, characterized in that the hybrid yarns comprise at least one component (core, relief yarn, binding yarn) itself having a hybrid nature.

10. Textile structure according to any one of claims 1 to 9, characterized in that some of the constituents of the technical yarns themselves have distinctive surface features, for example after having undergone, if the nature of the yarn permits it, a texturization treatment known per se.

11. Textile structure according to any one of claims 1 to 10, characterized in that it is of the unidirectional or multidirectional type, for example fabric, lap, filamentary winding and the like.

12. Textile structure according to any one of claims 1 to 11, characterized in that it consists solely of yarns with a relief configuration or of a combination of such yarns with conventional yarns.

13. Textile structure according to any one of claim 1 to 12, characterized in that it comprises components intended to facilitate the manufacture of the composite material, for example yarns impregnated or coated beforehand with thermoplastic material.

14. Textile structure according to any one of claims 1 to 12, characterized in that thermoplastic power is added to it.

15. Reinforcement for composite materials, comprising at least one textile structure according to any one of claims 1 to 14.

16. Reinforcement according to claim 15, characterized in that it consists solely of textile structures according to any one of claims 1 to 14 or of a combination of such structures with conventional textile structures.

17. Technical yarn with a relief configuration, as used for producing textile structures according to any one of claims 1 to 14 and reinforcements according to one of claims 15 or 16.
